# EUROPÄISCHE PATENTSCHRIFT

(11) **EP 0 741 988 B1**
(45) Veröffentlichungstag und Bekanntmachung des Hinweises auf die Patenterteilung: **03.11.1999**
(21) Anmeldenummer: 95902978.6
(22) Anmeldetag: 14.12.1994
(51) Int. Cl.: A47J 31/06, A47J 31/02

(54) **FILTER**
FILTER
FILTRE

(43) Veröffentlichungstag der Anmeldung: 13.11.1996
(73) Patentinhaber: KABUSHIKI KAISHA TOKIWA KOGYO, Iyomishima-shi, Ehime 799-31 (JP)
(72) Erfinder: AOKI, Tsuneo, Iyomishima-shi, Ehime 799-31 (JP)
(74) Vertreter: Sperling, Rüdiger, Dipl.-Ing. Dipl.-Wirtsch.-Ing.
(86) Internationale Anmeldenummer: JP9402127
(87) Internationale Veröffentlichungsnummer: WO9618332

(56) Entgegenhaltungen:
- DE-A- 3 434 687
- DE-C- 382 248
- JP-U- 2 012 327
- JP-U- 3 003 934
- JP-U- 4 102 932
- US-A- 1 683 786
- US-A- 2 224 378
- US-A- 3 370 524
- US-A- 3 616 934

## Beschreibung

Die vorliegende Erfindung betrifft einen Filter, der insbesondere geeignet ist, um Kaffee oder Tee zu machen.

### HINTERGRUNDTECHNIK

Herkömmliche Wegwerffilter, die verwendet werden, um einige Tassen Kaffee zu machen, enthalten ein Paar von im wesentlichen fächerförmigen Filterlagen, die aufeinandergelegt und entlang ihrer entgegengesetzten Seitenränder sowie längs ihrer Bodenränder miteinander verbunden sind, um einen Beutel in einer umgekehrten Konusform zu bilden, wenn ihre bogenförmigen freien Ränder voneinander beabstandet sind. Ein derartiger Beutel wird gewöhnlich von einem im wesentlichen ähnlich geformten Becher aufgenommen, der in Kombination mit einem derartigen Filter verwendet wird. Dann wird eine gewünschte Menge Kaffeepulver in den Beutel gegeben und heißes Wasser auf das Kaffeepulver gegossen, so daß Kaffee durch eine Öffnung tropft, die im Becherboden ausgebildet ist (siehe z.B. die DE-A-3 434 687).

Wenn der bekannte Filter verwendet wird, um Kaffee zu machen, fließt eine Kaffeemenge, die durch eine Umfangswand des Filters hinaus sickert, unvermeidlich entlang einer Innenwand des vorgenannten Bechers, der in Kombination mit dem Filter verwendet wird, nach unten zum Boden dieses Bechers. Jedoch wird der Kaffee manchmal durch Kontakt mit diesem Becher unannehmbar abgekühlt und muß mit einer Kaffee-Warmhalteplatte wieder erwärmt werden. Dieses nochmalige Erwärmen ist eine lästige Aufgabe.

Entsprechend ist es ein grundsätzliches Ziel der Erfindung, das vorgenannte Problem zu lösen.

Dieses Ziel wird durch einen Filter nach dem Anspruch 1 erreicht. Vorteilhafte und bevorzugte Weiterbildungen der Erfindung ergeben sich aus den Unteransprüchen im einzelnen und deren Kombinationen.

Erfindungsgemäß wird mittels sichel- oder teilkreisförmigen Klappenlagen ein Paar nach unten offener Taschen benachbart der Öffnung des umgekehrt konusförmigen Filters gebildet, was es gestattet, einen separat vorbereiteten Aufhänger oder Halter in den Filter einzubauen.

### ÜBERBLICK ÜBER DIE ERFINDUNG

Das angegebene Ziel wird gemäß der Erfindung mit einem verbesserten Filter erreicht, der ein Paar von Filterlagen enthält, die im wesentlichen identische Form und Größe haben, wobei jede der Filterlagen ein Paar von Seitenrändern, die aufwärts divergieren oder auseinander laufen, und bogenförmige Endränder hat, die zwischen Enden der Seitenränder verlaufen, um im wesentlichen eine Fächerform zu bestimmen, und wobei die beiden Filterlagen aufeinandergelegt und wenigstens in der Nähe der Seitenränder miteinander verbunden sind, so daß die bogenförmigen Ränder eine kreisförmige Öffnung bilden können, wenn die Filterlagen voneinander beabstandet sind, wobei im wesentlichen sichel- oder teilkreisförmig geformte Klappenlagen längs ihren bogenförmigen oberen Endrändern angebunden sind, um ein Paar Taschen zu bilden, die sich von den oberen Endrändern nach unten öffnen.

### KURZE BESCHREIBUNG DER ZEICHNUNGEN

Die Erfindung wird nachfolgend anhand von Ausführungsbeispielen unter Bezugnahme auf die zugehörigen Zeichnungen näher beschrieben, in denen:
Fig. 1 eine perspektivische Ansicht ist, die einen Filter gemäß der Erfindung zeigt, wie er tatsächlich verwendet wird;
Fig. 2 eine Schnittansicht längs einer Linie W-W in der Fig. 1 ist;
Fig. 3 eine Schnittansicht längs einer Linie X-X in der Fig. 1 ist;
Fig. 4 eine Draufsicht des Filters in teilweise aufgebrochener Ansicht ist;
Fig. 5 eine Draufsicht ist, die den Filter von Fig. 4 in entfaltetem Zustand zeigt;
Fig. 6 eine perspektivische Ansicht ist, die den Filter von Fig. 4 beim Bilden einer Öffnung zeigt; und
Fig. 7 eine Schnittansicht längs einer Linie Y-Y in der Fig. 6 ist;

### BESCHREIBUNG DER BEVORZUGTESTEN AUSFÜHRUNG

Einzelheiten eines Filters nach der Erfindung werden unter Bezugnahme auf die begleitenden Zeichnungen beschrieben.

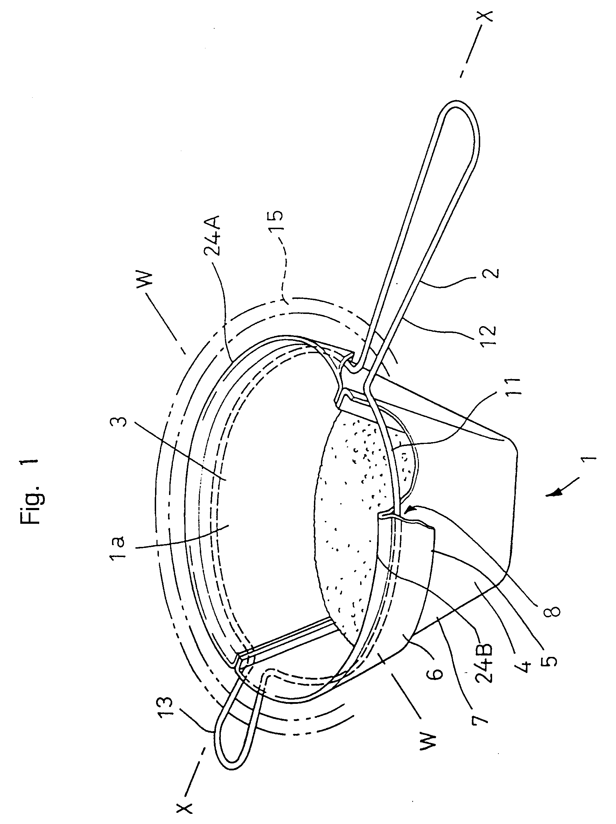

Die Fig. 1, 2 und 3 zeigen jeweils einen Filter 1 in einer perspektivischen Ansicht, wie er tatsächlich verwendet wird, und in Schnittansichten längs Linien W-W bzw. X-X. Unter Bezugnahme auf die Fig. 1 ist der Filter 1 als an einem Aufhänger oder Halter 2 aufgehängt gezeigt. Der Filter 1 ist als umgekehrtes Dreieck geformt, wie in der Schnittansicht längs der Linie W-W sichtbar ist, und als ein Trapezoid oder Trapez ausgebildet, dessen Bodenseite kürzer als seine Oberseite ist, und enthält einen Filterkörper 4, dessen Oberseite eine kreisförmige Öffnung 3 bildet, und Klappenlagen 6, die jeweils einen oberen Abschnitt, der längs eines teilweisen Umfangsrandes der Öffnung 3 mit dem Filterkörper 4 verbunden ist, und einen unteren Abschnitt haben, der einen freien Rand 5 bestimmt, so daß eine Tasche 8, die sich vom Filter 1 nach unten öffnet, zwischen einer Umfangswand des Filterkörpers 4 und den jeweiligen Klappenlagen 6 gebildet werden kann. Der Aufhänger 2 besteht aus rostfreiem Stahlwalzdraht und enthält ein Ringteil 11, ein Griffteil 12, das durch einen auswärts verlaufenden Teil des Ringteils gebildet ist, und ein Zapfenteil 13, das vom Ringteil 11 in die entgegengesetzte Richtung zu jener, in der das Griffteil 12 verläuft, auswärts verläuft. Die Fig. 1 zeigt das Griffteil 12 und das Zapfenteil 13 in auf einen Rand einer Kaffeetasse 15 aufgesetztem Zustand, die durch eine Scheinlinie angedeutet ist. Kaffeepulver 16 wird durch die Öffnung 3 in einen Raum, der durch den Filter 1 definiert ist, eingefüllt, und dann wird eine geeignete Menge heißen Wassers auf die Anhäufung von Kaffeepulver 16 gegossen. Folglich tropft Kaffee in die Tasse 15.

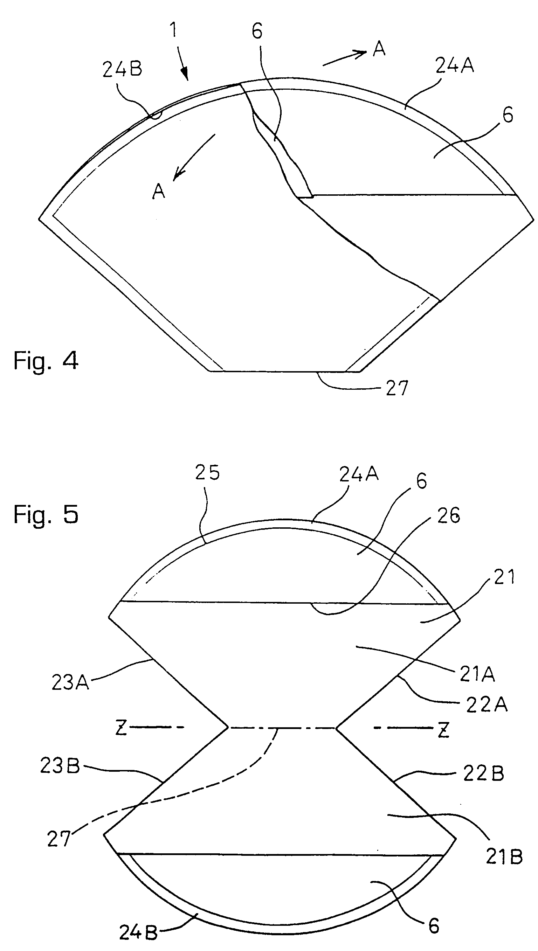

Die Fig. 4 und 5 sind eine Draufsicht des Filters in teilweise aufgebrochener Ansicht bzw. eine Draufsicht, die eine ursprüngliche Filterlage oder ein ursprüngliches Filterblatt 21 und die Klappenlagen 6 in einem Zustand zeigen, nachdem der Filter 1 entfaltet wurde. Die ursprüngliche Filterlage 21 enthält ein Paar von im wesentlichen fächerförmigen Sektionen 21A, 21B, die bezüglich einer Mittellinie Z-Z vertikal symmetrisch sind, wobei die Sektionen 21A, 21B jeweils durch Seitenränder 22A, 23A und 22B, 23B, die jeweils zunehmend voneinander weg verlaufen oder progressiv divergieren, wenn sie sich weiter von der Mittellinie Z-Z entfernen, und bogenförmige obere Endränder bestimmt sind, die zwischen Enden der Seitenränder 22A und 23A bzw. Enden der Seitenränder 22B und 23B verlaufen. Zwischen einem unteren Endrand der Seitenränder 22A, 22B und einem unteren Endrand der Seitenränder 23A, 23B bestimmt die Mittellinie Z-Z eine Faltlinie 27, wie später beschrieben wird. Die Klappenlagen 6 sind im wesentlichen teilkreisförmig, wie halbmond- oder sichelförmig, wobei ihre Bogenformen 25 längs deren Außenrändern 24A, 24B mit den jeweils zugehörigen fächerförmigen Sektionen 21A, 21B verbunden sind und ihre Sehnen 26 frei bleiben, so daß das ursprüngliche Filterblatt 21 mit den jeweiligen Klappenlagen 6 zusammenwirken kann, um die Tasche 8 zu bilden, die sich nach unten zur Mittellinie Z-Z öffnet. Die ursprüngliche oder originale Filterlage 21 wird längs der Faltlinie 27 zweilagig oder doppelt gefaltet, wobei die Klappenlagen 6 innen liegen, und diese beiden Hälften werden in der Nähe der Seitenränder 22A, 22B bzw. 23A, 23B, die aufeinander liegen, untrennbar miteinander verbunden, und dadurch wird der Filter 1 von Fig. 4 erhalten.

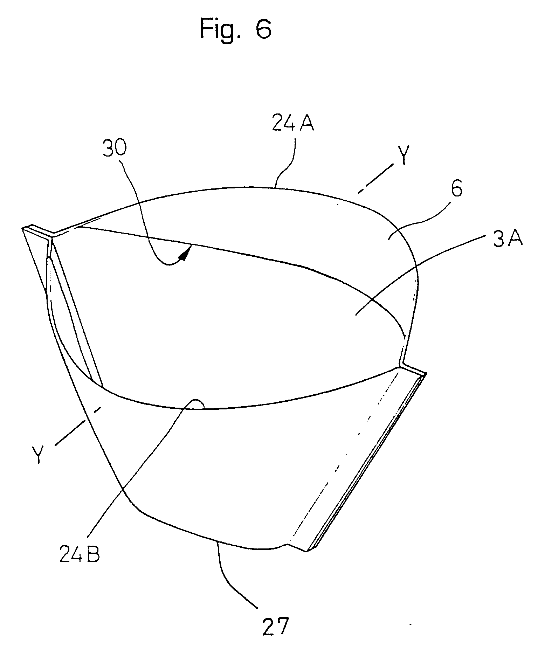

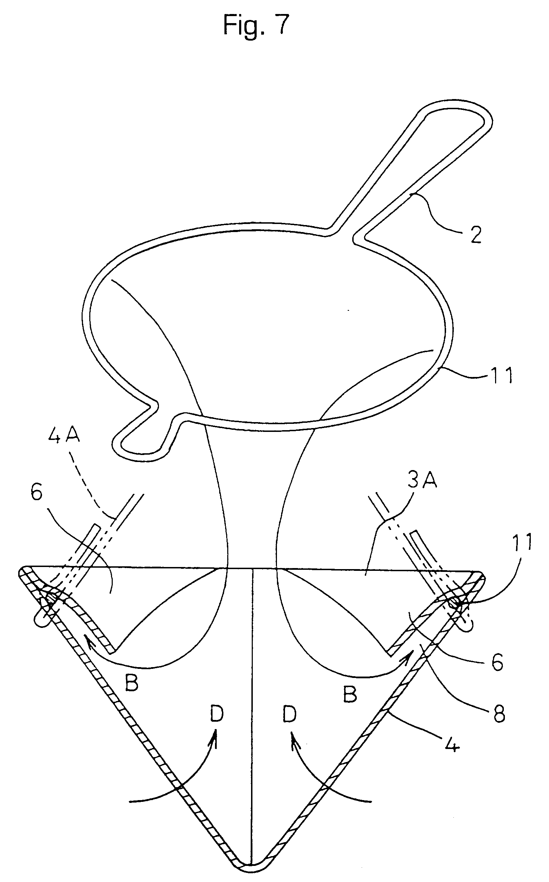

Die Fig. 6 und 7 zeigen den Filter 1 mit zum Bilden der Öffnung 3A voneinander beabstandeten Außenrändern 24A, 24B in einer perspektivischen Ansicht bzw. in einer Schnittansicht längs der Linie Y-Y. Es ist ersichtlich, daß die Fig. 7 auch eine perspektivische Ansicht des Aufhängers 2 in Kombination mit der perspektivischen Ansicht des Filters 1 zum besseren Verständnis der Weise enthält, in der der Aufhänger 2 in den Filter 1 eingebaut oder montiert wird. Die Außenränder 24A, 24B des Filters 1, der in der Fig. 4 gezeigt ist, wenn er in einem flachen Zustand ist, können voneinander in einer Richtung beabstandet werden, wie durch Pfeile A angegeben ist, um einen Beutel zu bilden, der ein Paar Endflächen, von denen jede als ein umgekehrtes Dreieck geformt ist, und die Taschen 8 hat, die zwischen dem Filterkörper 4 und den jeweiligen Klappenlagen 6 bestimmt sind, so daß sie sich nach unten öffnen. Das andere Paar Endflächen, die orthogonal zur Linie Y-Y sind und die Mittellinie Z-Z enthalten (siehe Fig. 5), sind als Trapezoide geformt, deren Bodenseiten durch die Faltlinie 27 bestimmt sind.

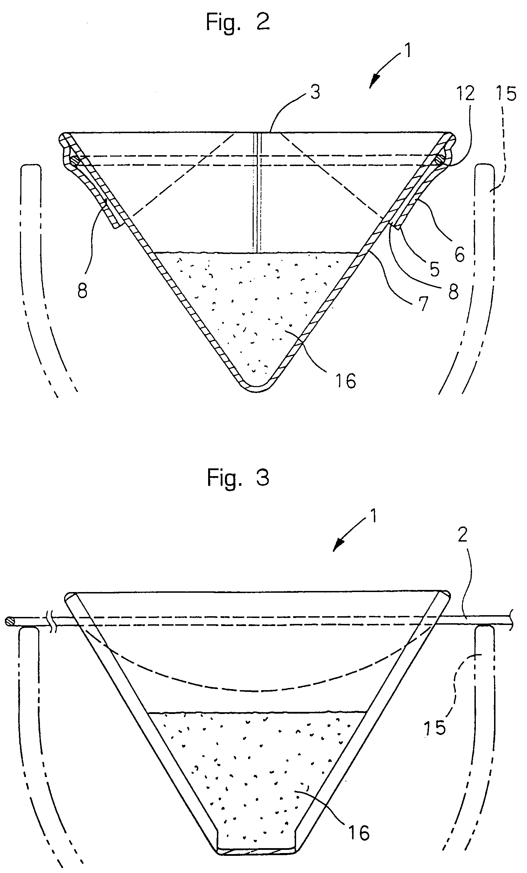

Im tatsächlichen Gebrauch des Filters 1 wird das Ringteil 11 des Aufhängers 2 in einer Richtung, die durch Pfeile B angegeben ist, durch die Öffnung 3A in die Taschen 8 eingesetzt, wie durch die Fig. 7 gezeigt ist. Dann wird der Boden des Filterkörpers 4 in eine Richtung, die durch Pfeile D angegeben ist, über eine Ebene hinaus nach oben gedrückt, die durch die Öffnung 3A bestimmt ist, wie durch Scheinlinien 4A gezeigt ist, um den Filter 1 umzudrehen oder zu wenden. Nach einem derartigen Wenden wird der Filter 1 in dem Zustand erhalten, wie er durch die Fig. 1 und 2 gezeigt ist, wobei dies jedoch ein verkehrter oder umgedrehter Zustand ist, der für einen unmittelbaren Gebrauch ungeeignet ist. Um einsatzbereit zu sein, wird die Halteweise des Aufhängers 2 geändert, so daß die Öffnung 3A über dem Rest liegt. Betreffend des Bezugszeichens wird die Öffnung vor dem Wenden durch 3A bezeichnet, und die Öffnung nach dem Wenden oder Umstülpen wird durch 3 bezeichnet. Wenn die Taschen 8 einmal als Ergebnis des Wendens außerhalb des Filters 1 gebildet sind, werden der Filterkörper 4 und die jeweiligen Klappenlagen 6 unter einer Last heißen Wassers, das auf die Aufhäufung von Kaffeepulver gegossen wird, das von dem Filter 1 getragen wird, relativ dicht zueinander bewegt, und der Filter 1 wird somit zuverlässig am Herabfallen vom Aufhänger 2 gehindert.

Für die Erfindung können der Filterkörper 4 und die Klappenlagen 6 aus jeglichen geeigneten Lagen bestehen, die üblicherweise als Material für Filter eingesetzt werden, wie Gewebematten, Textil- oder Gewebeverbundstoffe oder Filterpapier, und diese können durch Verwendung von Kleber oder einer Prägung miteinander verbunden werden. Jedoch ist es für den Filter 1, der dazu bestimmt ist, um verwendet zu werden, um Kaffee oder Tee zu machen, bevorzugt, ein Verbundgewebe aus warmversiegelbaren Synthetikfasern zu verwenden und es mit Heißsiegelung oder Warmschweißen zu behandeln, um den Filter 1 im Hinblick auf die Besorgnis zu erhalten, daß die Verwendung von Kleber den Geschmack von Kaffee oder Tee verschlechtern könnte. Als ein Beispiel besteht ein vorzugsweises Verbundgewebe aus einer Kompositfaser, die Polyethylen und Polypropyren mit einem Gewicht pro Flächeneinheit von 20 - 70 g/m² und noch bevorzugter von 30 - 50 g/m² enthält. In diesem Fall ist der Filter 1 geeignet, als Wegwerffilter verwendet zu werden, da ein derartiger Filter 1 hinsichtlich der Stärke, Materialkosten und Herstellungskosten vorteilhaft ist.

Obwohl die Verwendung des Filters 1 der Erfindung vorstehend beschrieben wurde, um Kaffe zu machen, kann der Filter 1 viele weitere Anwendungen finden, zum Beispiel zum Aufschaufeln von Stücken von frittierten Teig-Tempura (Meeresfrüchte oder Gemüse, zum Herausbacken in Teig getaucht) aus brutzelndem Öl. Gemäß der Ausführung, wie sie gezeigt ist, sind die Taschen 8 innerhalb des Filters 1 vorgesehen, und nachdem der Aufhänger 2 in den Filter 1 eingesetzt wurde, wird der Filter 1 hinsichtlich des Gesichtspunktes gewendet, daß es ein derartiges Verfahren erleichtert, den Aufhänger 2 in die Taschen 8 einzusetzen. Wenn jedoch ein solches Bedürfnis nicht erforderlich ist, können die Taschen 8 von Anfang an an der Außenseite des Filters 1 vorgesehen sein. Obwohl der Filterkörper 4 im wesentlichen ein Paar von Originalfilterlagen enthält und gemäß der gezeigten Ausführung, wie gezeigt ist, eine einzelne Originalfilterlage 21, die vertikal symmetrisch bezüglich der Mittellinie Z-Z ist, längs der Faltlinie 27 zweilagig oder aufeinander gefaltet wird, ist es außerdem auch möglich, separate Lagen als die Sektionen 21A, 21B der ursprünglichen Filterlage 21 vorzubereiten, diese separaten Lagen aufeinanderzulegen und sie entsprechend der Mittellinie Z-Z entlang ihrer Abschnitte miteinander zu verbinden. Es ist auch möglich, die getrennt vorbereiteten Lagen so auszuführen, daß sich die unteren Enden der Seitenränder 22A, 23A sowie die unteren Enden der Seitenränder 22B, 23B jeweils miteinander schneiden, d.h. daß eine Länge der Zone, die der Mittellinie Z-Z entspricht, Null wird. In diesem Fall wird der Filter 1 eine umgekehrte Konusform darstellen, und seine Endfläche wird in diametraler Richtung betrachtet ein umgekehrtes Dreieck formen. Obwohl die Klappenlagen 6 vorzugsweise aus flüssigkeitsdurchlässigen Filterlagen sind, können sie auch aus flüssigkeitsundurchlässigen Lagen sein.

### INDUSTRIELLER NUTZEN

Der Filter, der aufgebaut ist, wie oben beschrieben wurde, wird mit dem Aufhänger oder Halter verwendet, der das Ringteil, dessen Durchmesser geringfügig kleiner als jener der Filteröffnung ist, und das Griffteil enthält. Nach dem Einsetzen des Ringteils in das Paar oder die beiden Taschen, die an der Außenseite durch die Filterlage und die Klappenlagen gebildet sind, hängt der Filter nach unten, wobei seine Taschen von dem Aufhänger getragen werden, und bildet den Beutel, dessen Endfläche als das umgekehrte Dreieck oder das Trapezoid geformt ist, dessen Bodenseite kürzer als seine Oberseite ist, in diametraler Richtung betrachtet. Die Filterlage und die Klappenlagen werden unter einer Last heißen Wassers, das in den Filter gegossen wurde, relativ nahe zueinander bewegt, und verhindern daher zuverlässig ein Herabfallen vom Aufhänger. Wenn heißes Wasser in den Filter, der somit in dem Aufhänger aufgehängt ist, gegossen wird, um Kaffee zu machen, wird das heiße Wasser nicht ohne weiteres gekühlt, da es weder einen Becher oder eine Tasse noch andere Einrichtungen gibt, mit denen das Heißwasser in Kontakt ist.

Der Filter der Erfindung kann ebenfalls verwendet werden, um schwimmende Gegenstände aus einer Flüssigkeit, die in einem Behälter enthalten ist, aufzuschöpfen oder aufzuschaufeln.

Der Filter kann vorteilhafterweise aus Filterpapier oder Verbundgewebe bestehen, um als Wegwerffilter verwendet zu werden.

## Patentansprüche

1. Filter, enthaltend ein Paar Filterlagen (21), die im wesentlichen in Form und Größe identisch sind, wobei jede der Filterlagen ein Paar Seitenränder (22,23), die aufwärts divergieren, und einen bogenförmigen oberen Endrand hat, der zwischen Enden der Seitenränder (22,23) verläuft, um im wesentlichen eine Fächerform zu bestimmen, und wobei die beiden Filterlagen (21) aufeinander gelegt und zumindest in der Nähe der Seitenränder (22,23) miteinander verbunden sind, so daß die bogenförmigen oberen Endränder eine kreisförmige Öffnung (3) bilden können, wenn die Filterlagen (21) voneinander beabstandet sind,
dadurch gekennzeichnet,
daß im wesentlichen sichel- oder teilkreisförmige Klappenlagen (6) längs ihren bogenförmigen Rändern mit den jeweiligen Filterlagen (21) längs deren bogenförmigen oberen Endrändern verbunden sind, so daß sie ein Paar Taschen (8) bilden, die sich von den oberen Endrändern nach unten öffnen.

2. Filter nach Anspruch 1, dadurch gekennzeichnet, daß die Taschen (8) an der Innenseite des Filters (1) ausgebildet sind.

3. Filter nach Anspruch 1 oder 2, dadurch gekennzeichnet, daß die Filterlagen (21) und die Klappenlagen (6) aus einem Gewebeverbund aus wärmeversiegelbaren Fasern besteht und diese Elemente durch eine Wärmeversiegelung dieses Gewebeverbundes verbunden sind.

## Claims

1. Filter, containing a pair of filter papers (21), which are substantially identical in shape and size, each of the filter papers having a pair of side edges (22, 23), which diverge upwards, and an arcuate upper end edge, which runs between ends of the side edges (22, 23), in order to define substantially a fan shape, and the two filter papers (21) being laid on one another and connected to one another at least in the proximity of the side edges (22, 23), such that the arcuate upper end edges can form a circular aperture (3), when the filter papers (21) are at a spacing from one another,
**characterised in that**
substantially sickle-shaped or semi-circular flap layers (6) are connected along their arcuate edges with the respective filter papers (21) along their arcuate upper end edges, such that they form a pair of pockets (8) which open from the upper end edges downwards.

2. Filter according to claim 1, **characterised in that** the pockets (8) are formed on the inner side of the filter (1).

3. Filter according to claim 1 or 2, **characterised in that** the filter papers (21) and the flap layers (6) consist of a textile composite made of heat- sealable fibres and these elements are connected through heat-sealing of this textile composite.

## Revendications

1. Filtre, comprenant une paire de couches filtrantes (21) de forme et de taille pratiquement identiques, chacune de ces couches filtrantes présentant deux bords latéraux (22, 23) divergents en direction du haut, et un bord d'extrémité supérieur en forme d'arc qui s'étend entre des extrémités desdits bords latéraux (22, 23), pour définir pratiquement une forme d'éventail, filtre dans lequel les deux couches filtrantes (21) sont posées l'une contre l'autre et solidarisées au moins à proximité des bords latéraux (22, 23), en sorte que les bords d'extrémité supérieurs en forme d'arc puissent former une ouverture circulaire (3) lorsque les couches filtrantes (21) sont écartées l'une de l'autre, caractérisé en ce que des couches formant rabats (6) pratiquement en forme de croissant ou de cercle partiel sont raccordées aux couches filtrantes (21) respectives, le long de leurs bords d'extrémité supérieurs en forme d'arcs, de telle sorte qu'elles définissent deux poches (8) qui s'ouvrent vers le bas, en partant des bords d'extrémité supérieurs.

2. Filtre selon la revendication 1, caractérisé en ce que les poches (8) sont prévues du côté intérieur du filtre (1).

3. Filtre selon la revendication 1 ou 2, caractérisé en ce que les couches filtrantes (21) et les couches formant rabats (6) sont constituées d'une texture cohérente de fibres thermosoudables et que ces éléments sont raccordés par un soudage thermique de cette texture cohérente.
